**Europäisches Patentamt**

**European Patent Office**

**Office européen des brevets**

(19)

(11) **EP 1 202 367 A2**

(12) **EUROPÄISCHE PATENTANMELDUNG**

| | |
|---|---|
| (43) Veröffentlichungstag:<br>**02.05.2002 Patentblatt 2002/18** | (51) Int Cl.$^7$: **H01M 8/06** |

(21) Anmeldenummer: **01124026.4**

(22) Anmeldetag: **09.10.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **28.10.2000 DE 10053597**

(71) Anmelder: **XCELLSIS GmbH
73230 Kirchheim/Teck-Nabern (DE)**

(72) Erfinder:
• **Boneberg, Stefan
72660 Beuren (DE)**

• **Schäfer, Martin
73230 Kirchheim/Teck (DE)**
• **Schüssler, Martin, Dr.
89073 Ulm (DE)**
• **Theis, Erik
73230 Kirchheim/Teck-Nabern (DE)**
• **Wolfsteiner, Matthias
73230 Kirchheim (DE)**

(74) Vertreter: **Kocher, Klaus-Peter Dipl.-Phys et al
DaimlerChrysler AG,
Intellectual Property Management,
FTP-C 106
70546 Stuttgart (DE)**

(54) **Gaserzeugungssystem für ein Brennstoffzellensystem und Verfahren zur Bereitstellung wasserstoffhaltigen Brennstoffs**

(57) Ein Gaserzeugungssystem und ein Verfahren zur Bereitstellung eines wasserstoffhaltigen Gasstroms für ein Brennstoffzellensystem, wobei zur Verminderung eines im Gasstrom enthaltenen CO-Anteils eine oder mehrere selektive Oxidationsstufen, die insbesondere mit einem Reformer (1) zur Kohlenwasserstoffreformierung oder einem Wärmetauscher thermisch gekoppelt sind, vorgesehen sind. Um zur Inbetriebnahme des Systems bei Umgebungstemperatur möglichst schnell einen wasserstoffhaltigen Gasstrom mit niedrigem CO-Anteil dem Brennstoffzellensystem (4) zur Verfügung stellen zu können, wird vorgeschlagen, eine oder mehrere zusätzliche, thermisch entkoppelte selektive Oxidationsstufen (2) der oder den vorhandenen selektiven Oxidationsstufen (3) vor- und/oder zwischen- und/oder nachzuschalten.

Fig. 1

**EP 1 202 367 A2**

**Beschreibung**

Die Erfindung betrifft ein Gaserzeugungssystem für ein Brennstoffzellensystem zur Bereitstellung eines wasserstoffhaltigen Gasstroms als Brennstoff des Brennstoffzellensystems, wobei zur Verminderung eines im Gasstrom enthaltenen Kohlenmonoxidanteils eine oder mehrere selektive Oxidationsstufen vorgesehen sind, die insbesondere mit einem Reformer zur Kohlenwasserstoffreformierung oder einem Wärmetauscher thermisch gekoppelt sind. Die Erfindung betrifft weiterhin ein entsprechendes Verfahren zur Bereitstellung wasserstoffhaltigen Brennstoffes für ein Brennstoffzellensystem.

Genannte Gaserzeugungssysteme werden beispielsweise in brennstoffzellenbetriebenen Kraftfahrzeugen eingesetzt, um den zum Betrieb der Brennstoffzellen notwendigen Wasserstoff als Brennstoff zu liefern. Hierzu wird in einem Reformer beispielsweise Methanol reformiert, wobei gemäß folgender Reaktion Kohlendioxid und Wasserstoff entstehen:

$$CH_3OH + H_2O \rightarrow CO_2 + 3H_2$$

Durch Zufuhr von Luft/Sauerstoff kann dieser Prozeß durch die exotherme Umsetzung des Kohlenwasserstoffs unterstützt werden. Ein wasserstoffreiches Gas wird dabei durch partielle Oxidation des Kohlenwasserstoffes erzeugt.

Bei dieser Umsetzung von Methanol entsteht in Zwischenschritten auch Kohlenmonoxid, so daß das Reformat im wesentlichen Wasserstoff, Kohlendioxid, Wasser(dampf) und Kohlenmonoxid enthält. Die bei ca. 1% liegende CO-Konzentration muß zur Verwendung des Reformats in einer Brennstoffzelle auf unter 40ppm abgesenkt werden, da Kohlenmonoxid den Wirkungsgrad von Polymermembran-Brennstoffzellen drastisch senkt.

Zur Entfernung von CO in wasserstoffreicher Atmosphäre können die Wassergas-Shift-Reaktion und die selektive Oxidation von CO in Festbettreaktoren an entsprechenden selektiven Katalysatoren vorgenommen werden. Der katalytische Feststoff liegt hierbei in Form von Pellets oder Kugeln als Schüttung im Reaktionsrohr vor oder in Form einer Beschichtung im Inneren von Wärmetauscherkanälen.

Bei der Wassergas-Shift-Reaktion

$$CO + H_2O \rightarrow CO_2 + H_2$$

wird Kohlenmonoxid mit Wasserdampf katalytisch zu Kohlendioxid umgesetzt. Hierdurch gelingt eine Absenkung der CO-Konzentration auf etwa 0,5% im Reformat. Zur weiteren Konzentrationssenkung wird daher das Reformat durch eine oder mehrere Oxidationsstufen geleitet. Hier wird Kohlenmonoxid gemäß

$$CO + \tfrac{1}{2} O_2 \rightarrow CO_2$$

zu Kohlendioxid umgesetzt, wobei der Anteil des Kohlenmonoxids im Reformat auf deutlich unter 40ppm reduziert werden kann.

Aus der US-5,271,916 ist ein mehrstufiges selektives Oxidationsverfahren bekannt, bei dem das aus einem Shift-Reaktor austretende Reformat mit Sauerstoff/Luft versetzt und durch einen Wärmetauscher geleitet wird, um die Temperatur in einem Bereich zwischen 160 und 175 °C zu halten. In parallel geschalteten katalytischen Reaktionskammern findet adiabatisch die exotherme Umsetzung des Kohlenmonoxids im Reformat statt. Mittels eines zweiten Wärmetauschers wird die Temperatur des erzeugten Gasgemisches auf etwa 190°C herabgekühlt, und das Gasgemisch wird zusammen mit zugeführtem Sauerstoff einer zweiten Reaktionsstufe zugeleitet. Danach erfolgt wiederum eine Abkühlung, um eine Gleichgewichtsreaktion zu verhindern, bei der Kohlenmonoxid wieder erzeugt werden würde. Das der Brennstoffzelle zugeführte wasserstoffreiche Gas enthält dort weniger als etwa 0,01 % Kohlenmonoxid.

Die Verwendung hintereinander geschalteter selektiver CO-Oxidationsstufen mit jeweils regelbarer Sauerstoffzufuhr ist aus der DE-4334983A1 und der DE-19544895C1 bekannt, wobei bei der zuletzt genannten Schrift durch Regelung der Durchflussmenge des oxidierenden Gases die Wärmeentwicklung der exotherm verlaufenden CO-Oxidationsreaktion derart gezielt beeinflusst werden soll, daß eine Vorkühlung des den Reformer verlassenden Gasgemischs vor Einleiten in die selektive Oxidationsstufe unterbleiben kann.

Eine mehrstufige selektive Oxidation von Kohlenmonoxid in Plattenwärmetauschern ist aus der WO97/25752 bekannt, wobei hier das Reformat mit zugesetztem Sauerstoff durch Kanäle geleitet wird, die aus mit einem Katalysator beschichteten gewellten Metall gebildet sind. Parallel dazu, durch ebene Metallflächen getrennt, wird ein Kühlmittel geleitet, um den Temperaturanstieg in der Oxidationsstufe auf unter 190°C zu halten. Bei höheren Temperaturen wird der im Reformat enthaltene Wasserstoff immer stärker oxidiert. Bei Verlassen der ersten selektiven Oxidationsstufe werden Kühlmittel und Reformat mittels Wärmetauscher nochmals abgekühlt und anschließend in die nächste selektive Oxidationsstufe geleitet. Hier wird der Kohlenmonoxidanteil auf etwa 10ppm abgesenkt, die Austrittstemperatur beträgt etwa 80°C. Weitere als Wärmetauscher ausgeführte selektive Oxidationsstufen sind aus der EP-0616733B1 und EP-0720781B1 bekannt, wobei hier die Temperatur bzw. die Sauerstoffkonzentration im Reaktionsstrom konstant gehalten wird.

Die zahlreichen bekannten Vorrichtungen und Verfahren zur selektiven Oxidation von Kohlenmonoxid betreffen den Betrieb der Systeme, wenn diese Betriebstemperatur erreicht haben. Es stellen sich hierbei die genannten Probleme, die Katalysatortemperatur in einem vorgegebenen Bereich zu halten, bei der der Katalysator optimal arbeitet, und die Reaktionstemperaturen in einem Bereich zu halten, in dem überwiegend Kohlenmonoxid, nicht jedoch Wasserstoff oxidiert wird. Hierzu ist eine ständige Kühlung der CO-Oxidationsstufen notwendig.

Beim Start eines Brennstoffzellensystems ist es jedoch notwendig, die CO-Oxidationsstufen möglichst schnell auf Betriebstemperatur zu bringen, um von Anfang an der Brennstoffzelle ein Reformat mit geringen CO-Konzentrationen zur Verfügung zu stellen.

Um dieses Problem zu lösen, wurde in der JP0010029802A (Anmeldenummer: 1996 202803) vorgeschlagen, den Katalysator der selektiven Oxidationsstufe mit einem im wesentlichen aus Wasserstoff bestehenden Gas bei einer Temperatur oberhalb 50 °C vorzubehandeln, das dort ohne Zugabe von Luft reagiert. Im gleichen Zusammenhang wird in der JP0008133701A (Anmeldenummer: 1994 288612) vorgeschlagen, für den Kaltstart oder nach Betriebsunterbrechungen dem selektiven Oxidationsreaktor Oxidationsmittel (Luft) immer dann im Überschuß zuzuführen, wenn die Temperatur unterhalb der Katalysatorbetriebstemperatur liegt. Hierdurch wird zusätzlich zum Kohlenmonoxid auch Wasserstoff oxidiert, wodurch die Temperatur aufgrund der exothermen Reaktion schnell ansteigt. Nach Erreichen der Aktivierungstemperatur des Katalysators wird die Zufuhr des Oxidationsmittels derart gesteuert, daß eine optimale Umsetzung des Kohlenmonoxids erfolgt.

Dieses vorgeschlagene Verfahren zum Kaltstart von CO-Oxidationsstufen basiert auf einer raschen Temperaturerhöhung aufgrund der exothermen Umsetzung von Wasserstoff. Dies führt jedoch zu einer Verminderung des Wasserstoffanteils im Reformat, so daß die Brennstoffzelle während der Startphase nicht ausreichend mit Brennstoff versorgt werden kann, wodurch der Wirkungsgrad des Systems verschlechtert wird.

Aufgabe vorliegender Erfindung ist es, beim Kaltstart und nach Betriebsunterbrechungen eines gattungsgemäßen Gaserzeugungssystems unter geringstmöglicher Zeitverzögerung das Brennstoffzellensystem mit der notwendig geringen CO-Konzentration und mit ausreichend hoher Wasserstoffkonzentration in Betrieb zu nehmen.

Diese Aufgabe wird erfindungsgemäß durch ein Gaserzeugungssystem gemäß Anspruch 1 sowie durch ein Verfahren gemäß Anspruch 6 gelöst.

Vorteilhafte Ausgestaltungen ergeben sich aus den jeweiligen Unteransprüchen.

Gemäß vorliegender Erfindung sind zur selektiven Oxidation von Kohlenmonoxid beim Start des Gaserzeugungssystems der oder den thermisch gekoppelten selektiven Oxidationsstufen eine oder mehrere zusätzliche, thermisch entkoppelte selektive Oxidationsstufen vor- und/oder nachgeschaltet. Falls die selektive Oxidation mit hintereinandergeschalteten Katalysatoranordnungen vorgenommen wird, können erfindungsgemäß auch zusätzliche, thermisch entkoppelte Oxidationsstufen zwischen zwei Katalysatoranordnungen geschaltet sein. Die zusätzlichen selektiven Oxidations(Selox)-Stufen sind so aufgebaut, daß ein Start auch bei tiefen Temperaturen möglich ist. Dies kann grundsätzlich zunächst dadurch erzielt werden, daß die Reaktion dort unter adiabaten oder annähernd adiabaten Bedingungen abläuft, daß also die zusätzliche Selox-Stufe thermisch isoliert ist. Dies führt zu einem schnellen Temperaturanstieg in der Startphase, so daß der zugehörige Katalysator schnell seine normale Betriebsaktivität erreicht.

Insbesondere unmittelbar nach einem Kaltstart können die zusätzlichen Selox-Stufen beheizt, beispielsweise mittels einer Glühkerze elektrisch beheizt werden. Diese Zusatzheizung kann bei Verwendung von adiabaten zusätzlichen Selox-Stufen nach Erreichen der Betriebstemperatur abgeschaltet werden.

Erfindungsgemäß wird beim Kaltstart oder nach längerer Betriebsunterbrechung die Funktion der CO-Oxidation von den zusätzlichen (adiabaten) Selox-Stufen übernommen, während im Normalbetrieb die CO-Oxidation in den meist mit einem Reformer oder Wärmetauscher gekoppelten Stufen abläuft. Die gekoppelten Oxidationsstufen dienen beim Kaltstart zur Kühlung des die zusätzliche, thermisch entkoppelte Selox-Stufe verlassenden Reformats, um in der nächsten (soweit vorhanden) adiabaten Selox-Stufe wieder eine ausreichend hohe Gasmenge adiabat umsetzen zu können. Die gekoppelten Selox-Stufen werden dabei durch das heiße Abgas erwärmt und übernehmen mehr und mehr ihre eigentliche Aufgabe.

Durch die Erfindung kann folglich wasserstoffhaltiges Gas, das in vorgeschalteten partiellen Oxidations- und/oder Reformierungsstufen erzeugt wird, oder das aus einem Reformatspeicher stammt, sofort zur Stromerzeugung in einer Brennstoffzelle benutzt werden.

Die zusätzlich geschalteten, thermisch entkoppelten Selox-Stufen können durch Zufuhr von zusätzlichem Brennstoff und/oder Luft aufgeheizt werden. Die Aufheizung erfolgt dann schon bevor Reformat zur Verfügung steht. Hierdurch wird das Anspringen der Hauptstufe (gekoppelte Selox-Stufen) deutlich beschleunigt.

Die erfindungsgemäßen zusätzlichen Selox-Stufen können über die Luftdosierung der vorgeschalteten gekoppelten Selox-Komponenten versorgt werden, da in letzteren kaum ein Umsatz stattfindet, solange die Katalysatortemperatur unter der Anspringtemperatur liegt. Selbstverständlich kann jedoch auch vor jeder zusätzlichen thermisch entkoppelten Stufe auch eine zusätzliche Luftdosierung eingebaut sein.

Die entkoppelten zusätzlichen Stufen können auch in die vorgeschalteten gekoppelten Komponenten (Selox mit Reformer bzw. Wärmetauscher) integriert werden. Als besonders vorteilhaft erweist sich hierbei der Einbau in den Sammlerkanal der vorgeschalteten Komponente.

Im folgenden soll die Erfindung anhand von durch die beigefügten Zeichnungen illustrierten Ausführungsbeispielen näher erläutert werden.

Fig. 1   zeigt ein erfindungsgemäßes Gaserzeugungssystem in stark schematisierter Form mit einer vor die Hauptstufe geschalteten Vorstufe zur selektiven CO-Oxidation.

Fig. 2   zeigt ein weiteres erfindungsgemäßes Gaserzeugungssystem mit vor-, zwischen- und nachgeschalteter zusätzlichen Stufen zur selektiven CO-Oxidation

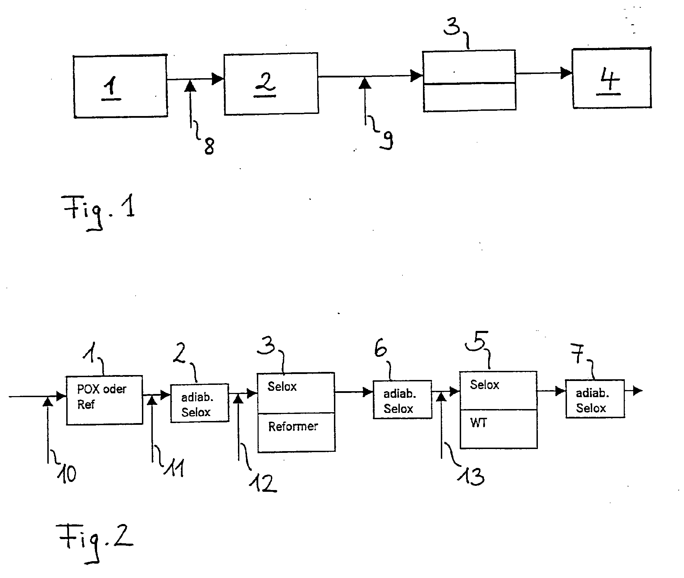

Das Gaserzeugungssystem gemäß Fig. 1 weist einen Reformer 1 auf, der durch Reformierung von Methanol in bekannter Weise ein wasserstoffhaltiges Reformat erzeugt. Der Übersichtlichkeit halber sind eventuell nachgeschaltete Wärmetauscher und Shift-Reaktoren, die zur Absenkung der CO-Konzentration dienen, nicht dargestellt. Das Reformat kann außer aus einer Reformierungseinheit auch aus einem Reformatspeicher, der Reformat aus vorangegangenen Betriebszyklen speichert, stammen. Das wasserstoffhaltige Reformat dient in diesem Ausführungsbeispiel zur Versorgung eines Brennstoffzellensystems mit Brennstoff (Wasserstoff) zum Antrieb eines Kraftfahrzeugs. Hierzu wird das wasserstoffhaltige Reformat der Anodenseite des Brennstoffzellensystems zugeführt, während (Luft-) Sauerstoff der Kathodenseite zugeleitet wird. Im Brennstoffzellensystem erfolgt die elektrochemische Umsetzung des Wasserstoffs zu Wasser unter Erzeugung von Strom. Dieser Strom dient dann zur Versorgung eines Elektromotors und/oder anderer Verbraucher im Kraftfahrzeug.

Das direkte Einleiten von Reformat würde, auch nach Reinigung in einem Shift-Reaktor, zur Vergiftung der Brennstoffzellen aufgrund des darin enthaltenen CO führen. Daher ist es erforderlich, die CO-Konzentration auf unter 40ppm, vorzugsweise unter 10ppm, zu reduzieren. Hierzu werden üblicherweise selektive Oxidationskatalysatoren verwendet, die zur Optimierung des Oxidationsprozesses mehrstufig hintereinander geschaltet sein können. Zwischen den einzelnen Stufen erfolgt eine Zudosierung von (Luft-)Sauerstoff, um die für jede Stufe notwendige Sauerstoffkonzentration optimal regeln zu können. In Figur 1 ist eine derartige Hauptstufe zur selektiven CO-Oxidation mit dem Bezugszeichen 3 dargestellt. Die Luftzudosierung erfolgt über die Leitung 9. Die Hauptstufe 3 mit Luftzuführungsleitung 9 kann, wie oben ausgeführt, mehrstufig ausgebildet sein.

Die selektiven Oxidationsstufen sind thermisch mit Reformerstufen oder Wärmetauschern gekoppelt.

Ein derartiges Gaserzeugungssystem weist den wesentlichen Nachteil auf, daß beim Start des Systems (Kaltstart oder unterbrochener Betrieb) die selektive Oxidation erst dann wirksam stattfinden kann, wenn der Katalysator die erforderliche Betriebstemperatur von mindestens 100 °C erreicht hat. Vorher kann das Reformat nicht zur Stromerzeugung der Brennstoffzelle 4 zugeführt werden, da diese sonst vergiftet werden würde. Daher ist erfindungsgemäß der Hauptstufe 3 eine Vorstufe 2 zur selektiven CO-Oxidation vorgeschaltet, die adiabat betrieben wird und daher beim Kaltstart sehr schnell startet. Die Vorstufe 2 übernimmt während der Startphase, in der Reformat in dem vorgeschalteten Reformer 1 entsteht, die Funktion der Haupt-Selox-Stufe. Gleichzeitig wird der eigentlichen Hauptstufe 3 Energie (durch die exotherme CO-Oxidation erwärmtes Reformat) zugeführt, um dort ein Anspringen der Reaktion zu gewährleisten. Die Hauptstufe 3 ist hier als Platten- oder Rohrbündelwärmetauscher aufgebaut, so daß eine ständige Kühlung des Katalysators erfolgen kann, um die Katalysatortemperatur unterhalb etwa 180 °C zu halten. Bei Überschreiten dieser Temperatur würde nämlich auch Wasserstoff oxidiert werden, der als Brennstoff benötigt wird.

Es kann vorteilhaft sein, eine Aufheizung der Vorstufe 2 schon vorzunehmen, bevor Reformat zur Verfügung steht. Hierzu kann die Vorstufe 2 beispielsweise elektrisch beheizt werden oder es kann zusätzlich Brennstoff und/oder Luft über die Leitung 8 zudosiert werden. Die resultierenden exothermen Reaktionen setzen dann Wärme frei. Hiermit kann ein Anspringen der Hauptstufe 3 deutlich beschleunigt werden.

Fig. 2 zeigt ein weiteres Ausführungsbeispiel des erfindungsgemäßen Gaserzeugungssystems, wobei gleiche Komponenten wie in Figur 1 mit gleichen Bezugszeichen versehen sind. Das wasserstoffhaltige Gas stammt aus einem Reformer 1, einer partiellen Oxidationseinheit (POX) oder einem Reformatspeicher. In diesem Ausführungsbeispiel wird Reformat selektiv in zwei hintereinander geschalteten Stufen 3 und 5 oxidiert, um die CO-Konzentration im Reformat zu reduzieren. Stufe 3 besteht aus einer selektiven Oxidationsstufe gekoppelt mit einem Reformer, Stufe 5 besteht aus einer mit einem Wärmetauscher gekoppelten Selox-Stufe. Der ersten Oxidationsstufe 3 ist wie beim oben besprochenen Ausführungsbeispiel eine Vorstufe 2 in Form eines adiabatischen selektiven Oxidationsreaktors vorgeschaltet. Die Luftleitung 11 versorgt die Vorstufe 2 mit dem notwendigen Sauerstoff. Weiterhin ist zwischen den beiden Stufen 3 und 5 ein zusätzlicher adiabatischer selektiver Oxidationsreaktor 6 zwischengeschaltet. Diese Zwischenstufe 6 erhält den notwendigen Luftsauerstoff über die Luftzufuhrleitung 12 der vorgeschalteten thermisch gekoppelten Selox-Komponente 3. Schließlich ist erfindungsgemäß der zweiten Hauptstufe 5 eine zusätzliche adiabatische Selox-Stufe 7 nachgeschaltet. Das aus der letzten Stufe 7 austretende Reformat kann vor Eintritt in das Brennstoffzellensystem 4 einen Kühler durchlaufen, um die Eintrittstemperatur der Brennstoffzelle zu begrenzen und eine erneute Bildung von Kohlenmonoxid zu vermeiden.

Beim Kaltstart des erfindungsgemäßen Gaserzeugungssystems sind die Katalysatortemperaturen der beiden Hauptstufen 3 und 5 zu niedrig, um eine ausreichende Reduktion der CO-Konzentration im Reformat zu garantieren. Erfindungsgemäß sind deshalb drei zusätzliche, thermisch entkoppelte Selox-Stufen 2, 6 und 7 vor- bzw. zwischen- bzw. nachgeschaltet. Die gekoppelten Selox-Stufen 3 und 5 dienen beim Kaltstart zur Kühlung des Reformats, um in der jeweils nächsten adiabaten Selox-Stufe 6 bzw. 7 wieder eine ausreichend hohe Luftmenge adiabat umsetzen zu können. Die gekoppelten Stufen 3 und 5 werden hierbei durch das heiße Abgas der adiabaten Stufen 2 und 6 erwärmt und übernehmen mehr und mehr ihre eigentliche Aufgabe. Im Normalbetrieb läuft die CO-Oxidation in den gekoppelten Hauptstufen 3 und 5 ab.

Zur weiteren Verbesserung der Kaltstarteigenschaften kann einer der zusätzlichen adiabaten selektiven Oxidationsreaktoren, vorzugsweise die Vorstufe 2, elektrisch beheizt werden, um möglichst schnell die erforderliche Betriebstemperatur des Katalysators zu erreichen. Es ist auch möglich, Wärme zuzuführen, indem Luft und/oder Brennstoff über die Luftzufuhrleitung 11 zudosiert wird.

Eine eigene Luftzuführung für die beiden adiabaten Selox-Stufen 6 und 7, die den Hauptstufen 3 bzw. 5 nachgeschaltet sind, ist nicht erforderlich, da während der Kaltstartphase über die Luftleitungen 12 und 13 zugeführter Sauerstoff in den Hauptstufen 3 und 4 noch kaum umgesetzt werden kann.

Das aus den zusätzlichen adiabaten Selox-Einheiten 2 und 6 strömende erwärmte Reformat kann die Katalysatoren der Hauptstufen 3 bzw. 5 erwärmen und somit schneller auf die erforderliche Betriebstemperatur bringen. Gleichzeitig wird das Reformat abgekühlt, so daß in der nächsten adiabaten Selox-Stufe 6 bzw. 7 wieder eine ausreichend hohe Luftmenge umgesetzt werden kann.

Als vorteilhaft erweist sich, die erfindungsgemäßen zusätzlichen adiabaten Selox-Stufen 6 und 7 in den Sammlerkanal der jeweils vorgeschalteten Hauptstufe 3 bzw. 5 einzubauen.

Mit der Erfindung sind verbesserte Kaltstarteigenschaften eines mit einem wasserstoffreichen Reformat versorgten Brennstoffzellensystems garantiert, so daß einer Brennstoffzellenvergiftung aufgrund zu hoher CO-Konzentrationen wirksam begegnet werden kann. Gleichzeitig vermeidet die Erfindung einen Verbrauch von Wasserstoff zur Verbesserung der Kaltstarteigenschaften, so daß das Brennstoffzellensystem sofort mit der gesamten zur Verfügung stehenden Wasserstoffkonzentration versorgt werden kann.

**Patentansprüche**

1. Gaserzeugungssystem zur Bereitstellung eines wasserstoffhaltigen Gasstroms für ein Brennstoffzellensystem, wobei zur Verminderung eines im Gasstrom enthaltenen CO-Anteils eine oder mehrere selektive Oxidationsstufen vorgesehen sind, die insbesondere mit einem Reformer zur Kohlenwasserstoffreformierung oder einem Wärmetauscher thermisch gekoppelt sind, **dadurch gekennzeichnet,**
   **daß** zur selektiven Oxidation des Kohlenmonoxids bei Inbetriebnahme des Gaserzeugungssystems der oder den selektiven Oxidationsstufen (3, 5) eine oder mehrere zusätzliche, thermisch entkoppelte selektive Oxidationsstufen (2, 6, 7) vor- und/oder zwischen- und/oder nachgeschaltet sind.

2. Gaserzeugungssystem nach Anspruch 1, **dadurch gekennzeichnet, daß** mindestens eine der Oxidationsstufen (2, 6, 7) thermisch isoliert ist.

3. Gaserzeugungssystem nach Anspruch 1 oder 2, **dadurch gekennzeichnet, daß** mindestens eine der zusätzlichen Oxidationsstufen (2, 6, 7) elektrisch beheizbar ist.

4. Gaserzeugungssystem nach einem der Ansprüche 1 bis 3, **dadurch gekennzeichnet, daß** mindestens eine der zusätzlichen Oxidationsstufen (2, 6, 7) mit einer zusätzlichen Luft- und/oder Brennstoffzuführleitung (8; 11) gekoppelt ist.

5. Verfahren zur Bereitstellung eines wasserstoffhaltigen Gasstroms für ein Brennstoffzellensystem, wobei zur Verminderung eines im Gasstrom enthaltenen CO-Anteils das Kohlenmonoxid in einer oder mehreren Stufen selektiv katalytisch oxidiert wird, **dadurch gekennzeichnet,**
   **daß** in der Anfangsphase bei niedrigen Temperaturen das Kohlenmonoxid bei einer unabhängig einstellbaren Temperatur selektiv katalytisch oxidiert wird.

6. Verfahren nach Anspruch 5, **dadurch gekennzeichnet, daß** das Kohlenmonoxid adiabatisch selektiv oxidiert wird.

7. Verfahren nach Anspruch 5 oder 6, **dadurch gekennzeichnet, daß** die Temperatur in der Anfangsphase der selektiven Oxidation über eine elektrische Beheizung eingestellt wird.

8. Verfahren nach einem der Ansprüche 5 bis 7, **dadurch gekennzeichnet, daß** die Temperatur durch Zuleiten von Luft und/oder einem Brennstoff zum selektiv zu oxidierenden Gasstrom eingestellt wird.

9. Verfahren nach einem der Ansprüche 5 bis 8, **dadurch gekennzeichnet, daß** zur selektiven katalytischen Oxidation bei der unabhängig einstellbaren Temperatur Luft verwendet wird, die einer vorgeschalteten selektiven katalytischen Oxidationsstufe zugeleitet wird, die aufgrund der niedrigen Temperatur in der Anfangsphase geringen Luftumsatz aufweist.

10. Verfahren nach einem der Ansprüche 5 bis 9, **dadurch gekennzeichnet, daß** der in der Anfangsphase erzeugte selektiv oxidierte Gasstrom zur Erwärmung der übrigen selektiven Oxidationsstufen verwendet wird.

Fig. 1

Fig. 2